(19) **Europäisches Patentamt European Patent Office Office européen des brevets**

(11) **EP 4 645 147 A1**

(12) **EUROPEAN PATENT APPLICATION**

(43) Date of publication:
05.11.2025 Bulletin 2025/45

(21) Application number: 24219912.3

(22) Date of filing: 22.04.2024

(51) International Patent Classification (IPC):
**G06F 30/10** (2020.01)   **G06T 17/00** (2006.01)
**G06V 20/64** (2022.01)

(52) Cooperative Patent Classification (CPC):
**G06F 30/10; G06T 17/00; G06V 20/653;**
G06F 18/2137

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(62) Document number(s) of the earlier application(s) in accordance with Art. 76 EPC:
**24305618.1 / 4 641 424**

(71) Applicant: **Dassault Systèmes**
**78140 Vélizy-Villacoublay (FR)**

(72) Inventors:
• **Brifault, Lucas**
**78140 Vélizy-Villacoublay (FR)**
• **Brus, Mathieu**
**78140 Vélizy-Villacoublay (FR)**

(74) Representative: **Bandpay & Greuter**
**11, rue Christophe Colomb**
**75008 Paris (FR)**

Remarks:
This application was filed on 13-12-2024 as a divisional application to the application mentioned under INID code 62.

(54) **PROFILE DETECTION IN A DISCRETE 3D MODEL REPRESENTING A MECHANICAL PART**

(57)    The disclosure notably relates to a computer-implemented method for profile detection in a discrete 3D model. The discrete 3D model represents a mechanical part. The method comprises, for each 3D surface of at least one 3D surface of the 3D model, providing a candidate parameterization of the 3D surface and a candidate projection of the 3D surface into $\mathbb{R}^2$. The method further comprises computing a function. The function penalizes, for each couple of points of the 3D surface having neighboring parameter values, a distortion. The distortion is between a disparity between the projection of the points, and a disparity between the parameterization of the points. The method further comprises determining that the candidate parameterization and the candidate projection form a valid profile of the 3D surface if the computed function is smaller than a predefined threshold.

**Description**

**TECHNICAL FIELD**

The disclosure relates to the field of computer programs and systems, and more specifically to a method, system and program for profile detection in a discrete 3D model representing a mechanical part.

**BACKGROUND**

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Within this context, there is a need for improved solutions for profile detection in a discrete 3D model representing a mechanical part.

**SUMMARY**

It is therefore provided a computer-implemented method for profile detection in a discrete 3D model. The discrete 3D model represents a mechanical part. The method comprises, for each 3D surface of at least one 3D surface of the 3D model, providing a candidate parameterization of the 3D surface and a candidate projection of the 3D surface into $\mathbb{R}^2$. The method further comprises computing a function. The function penalizes, for each couple of points of the 3D surface having neighboring parameter values, a distortion. The distortion is between a disparity between the projection of the points, and a disparity between the parameterization of the points. The method further comprises determining that the candidate parameterization and the candidate projection form a valid profile of the 3D surface if the computed function is smaller than a predefined threshold.

The method may comprise one or more of the following:

- the function penalizes the distortion for each couple of consecutive points of the 3D surface according to an order of their parameter values;
- the disparity between the projections of the points is an increasing function of distance between the projection of the points, and the disparity between the parametrization of the points is an increasing function of a distance between the parametrization of the points;
- the function is of the type:

  ○

$$E^{V,F} = \sup_i E_i^{V,F},$$

where:

$$E_i^{V,F} = D(p_i, p_{i+1})^2 = |v_{i+1} - v_i|^2 - |f_{i+1} - f_i|^2,$$

where:

- $V = (v_1, \cdots, v_n)$ are the projections of the points $(p_1, \cdots, p_n)$: and
- $F = (f_1, \cdots, f_n)$ are the parameters associated with the points $(p_1, \cdots, p_n)$, the $f_i$ and the $p_i$ being ordered;

- the at least one 3D surface comprises at least one 3D surface for which the candidate parameterization and the candidate projection are determined not to form a valid profile;
- the at least one 3D surface comprises a 3D surface formed by an aggregation of a first 3D surface and a second 3D surface, the candidate projection being a candidate projection of the aggregation of the first and second 3D surfaces, the candidate parameterization being a candidate parameterization of the aggregation of the first and second 3D surfaces;
- the first 3D surface and the second 3D surface are adjacent and have common points, the candidate parameterization of the aggregation of the first and second 3D surfaces being an aggregation of a parametrization of the first 3D surface and of the second 3D surface such that the common points have a same parameterization;
- the parameterization of the aggregation of the first and second 3D surfaces is of the type:

$$h_i = \begin{cases} \frac{1}{2}(\hat{f}_i + \hat{g}_i) & \text{for } 1 \leq i \leq r \\ \hat{f}_i & \text{for } r+1 \leq i \leq r+m \\ \hat{g}_{i-m} & \text{for } r+m+1 \leq i \leq r+m+n \end{cases}$$

where:

$$\bar{s} = \frac{1}{r}\sum_{i=1}^{r}(g_i - f_i)$$

$$\hat{f}_i = f_i + \frac{1}{2}\bar{s}$$

$$\hat{g}_i = g_i - \frac{1}{2}\bar{s}$$

with $F = (f_1, \cdots, f_{r+m})$ the parameterization of the first 3D surface and $G = (g_1, \cdots, g_{r+n})$ the parameterization of the second 3D surface, $(f_1, \cdots f_r)$ and $(g_1, \cdots, g_r)$ parameterizing the common points $(c_1, \cdots, c_r)$;
- the discrete 3D model stems from a 3D scan of the mechanical part; and/or
- the method further comprises, if it is determined that the candidate parameterization and the candidate projection form a valid profile of the 3D surface:

- fitting a CAD operator to the surface based on the profile.

It is further provided a computer program comprising instructions for performing the method.

It is further provided a computer readable storage medium having recorded thereon the computer program.

It is further provided a computer system comprising a processor coupled to a memory, the memory having recorded thereon the computer program.

## BRIEF DESCRIPTION OF THE DRAWINGS

Non-limiting examples will now be described in reference to the accompanying drawings, where:

- FIG.s 1 to 5 illustrate the method; and

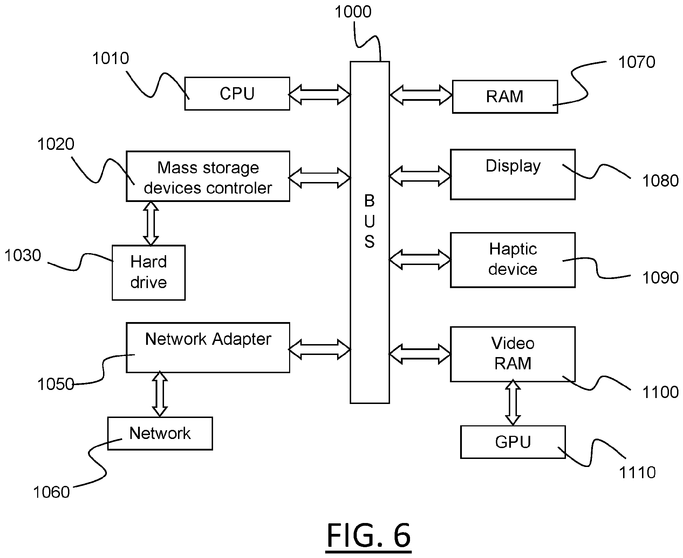

- FIG. 6 shows an example of the system.

## DETAILED DESCRIPTION

It is proposed a computer-implemented method for profile detection in a discrete 3D model. The discrete 3D model represents a mechanical part. The method comprises, for each 3D surface of at least one 3D surface of the 3D model, providing a candidate parameterization of the 3D surface and a candidate projection of the 3D surface into $\mathbb{R}^2$. The method further comprises computing a function. The function penalizes, for each couple of points of the 3D surface having neighboring parameter values, a distortion. The distortion is between a disparity between the projection of the points, and a disparity between the parameterization of the points. The method further comprises determining that the candidate parameterization and the candidate projection form a valid profile of the 3D surface if the computed function is smaller than a predefined threshold.

The method constitutes an improved solution for profile detection in a discrete 3D model that represents a mechanical part.

First, the method detects, for each 3D surface of one or more 3D surfaces of the discrete 3D model, a profile of the 3D surface. Specifically, the method detects whether a candidate parameterization and projection for the 3D surface form a valid profile, in which case the profile is detected (*i.e.* it is detected that the surface is profile-based). Detecting a profile for a 3D surface is particularly relevant in manufacturing CAD, manufacturing CAD referring to software solutions for the design and/or manufacturing of mechanical parts represented by 3D models. Indeed, detecting a profile of a 3D surface allows, for example, to fit a CAD operator to the 3D surface (*e.g.* an extrusion operator or a draft operator). Fitting a CAD operator may be part of a step of inference of a CAD feature tree for the 3D discrete model to have this model in a CAD format (CAD model) usable for manufacturing the mechanical part represented by the model.

Furthermore, not only does the method detect profiles, but the method does so in a robust manner.

Indeed, prior art methods exist that, for detecting a profile, detect small portions of curves and assemble them together (if possible) to form the profile. These methods may succeed in profile detection for very simple cases but fail for more complex cases. For example, self-intersecting curves, for example T-shape curves, may be detected as profiles by these methods. However, these self-intersecting profiles are not profiles in the manufacturing CAD world, as they cannot be processed by CAD software. For example, no CAD feature/operator can be fitted to a T-shape curve. This is more generally the case for degenerate/non-manifold curves, which the prior art may infer from degenerate/non-manifold surfaces. Thus, applying these profile-detection methods of the prior art would result in a processed 3D model that, except for very complex cases, would not be exploitable by CAD software, and that would make the CAD software crash when inputted to it. This problem is solved by the method. Indeed, for detection of a profile of a given 3D surface of the discrete 3D model, the method takes as input a candidate parameterization of the surface, and a candidate projection of the surface into the two-dimensional space $\mathbb{R}^2$. The parameterization of the surface is a continuous curve that maps the surface into IR. The projection is a continuous application that maps the surface into $\mathbb{R}^2$. The method then determines whether these inputs form a valid profile of the 3D surface, *i.e.* determines (N.B.: in the discrete setting) whether there exists a continuous curve with unit speed (the profile) that maps IR (or at least the image of the parameterization in $\mathbb{R}$) into $\mathbb{R}^2$ and so that the composition of this curve and of the parameterization equals the projection. The method determines whether this existence of a profile curve holds, but in a discrete setting as the 3D model is discrete. For that, the method computes a function that penalizes, for each couple of points of the 3D surface having neighboring parameter values, a distortion between a disparity between the projection of the points and a disparity between the parameterization of the points. In other words, the function tends to have small value when two neighboring points on the surface have close parameterization and when their projection on $\mathbb{R}^2$ remain close as well. If this is true for all couple of close points in the 3D surface, i.e. if the method determines that the function has a value smaller than a (small) predefined threshold for the 3D surface, it means that a true profile curve exists for the candidate parameterization and projection. If the function has a larger value, then the method determines that no profile exists for these the candidate parameterization and projection. This ensures that the method detects profiles that corresponds to continuous curves with unit speed, which are true profiles that can be processed by CAD software. Typically, T-shape curves, or more generally degenerated curves and/or self-intersecting curves, would fail the test performed by the method, *i.e.* would make the function being larger than the threshold. The method thus robustly discards these cases as valid profiles, to ensure robust integration of the 3D model in a CAD software. In other words, the evaluation of the couple projection-parameterization provides robustness and strength for profile detection.

The discrete 3D model may stem from a 3D scan of the mechanical part. Thus, in this case, the method detects one or more profiles of one or more surfaces in the scanned 3D model, and thereby performs indirect measurements in the scanned object. The method may thus be used for reverse engineering and may comprise, once the profiles are detected, fitting CAD feature operators to each profile to make the scanned object usable by a CAD software. The method may comprise, *e.g.* as an initial step, preforming the 3D scan of the mechanical part to obtain the discrete 3D model. When obtained from a 3D scan, the discrete 3D model may feature noise. In such a case, the prior art methods tend to fail in detecting the profiles in the model, whereas the method succeeds even in these cases. The method is thus robust to noisy models stemming from 3D scans.

Alternatively, or additionally, the method may also be used for designing and/or manufacturing the mechanical part represented by the discrete 3D model. For that, the method may comprise a further step of converting the discrete 3D model into a CAD model, by any known method. This may notably comprise fitting a CAD operator to each surface for which a profile has been detected, by any known suitable method. Then, the method may comprise additional steps related to design and/or manufacturing of the CAD model. These steps are discussed in further detail hereinafter.

The method may more generally be used in the fields of 3D CAD analysis, modeling and editing, 3D reconstruction and recognition, simulation and Design of Experiment.

Moreover, as further discussed herein after, the method can detect whether the aggregation of two valid profiles for two 3D surface still forms a valid profile for the aggregation of the two surfaces.

The method is for profile detection in a discrete 3D model representing a mechanical part. This means that the method takes as input the discrete 3D model and outputs, for each 3D surface of the at least one 3D surface, data indicating whether the candidate parameterization and candidate projection of the 3D surface form a valid profile (*e.g.* the output may be a yes or no indicator). If the output indicates that the candidate parameterization and projection indeed form a valid profile, the method may further comprise computing the profile (by any known method suitable for computing the profile based on the parameterization and projection) and outputting it or its parameters.

A valid profile, also referred to as a profile shape, is a triple $(S,\pi,\gamma)$ with $S \subset \mathbb{R}^3$ a surface, $\pi: S \to \mathbb{R}^2$ a continuous map, and $\gamma: [a, b] \to \mathbb{R}^2$ a curve with unit speed such that there exists a continuous map, $\varphi: S \to \mathbb{R}$ and satisfying:

$$\pi = \gamma \circ \varphi \qquad (*)$$

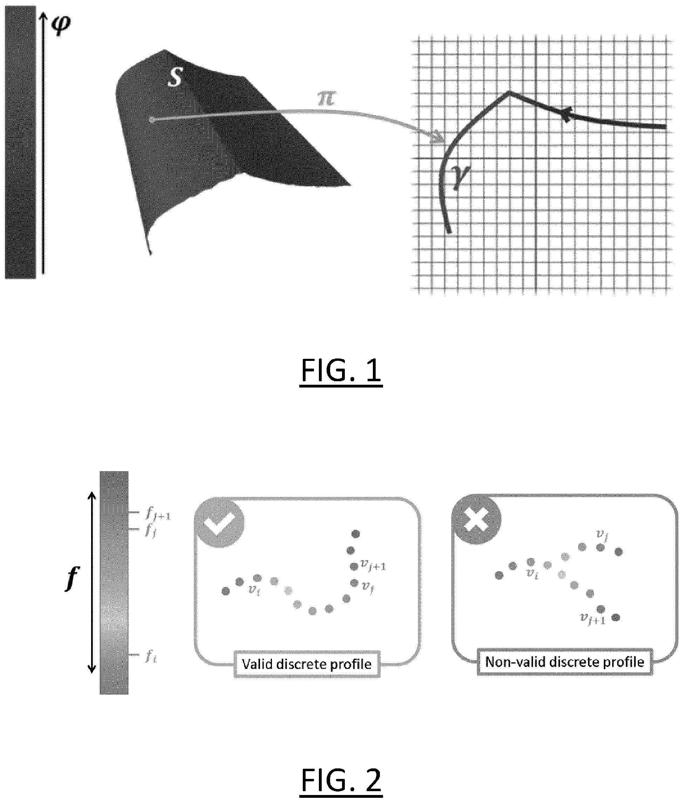

If (*) holds, then $\pi$ is the projection of the profile shape, $\gamma$ is its profile curve (also referred to as "the profile"), and $\varphi$ is the parameterization of the profile shape. This definition is illustrated on FIG. 1. Examples of CAD profile shapes include extrusion surfaces, revolution surfaces, drafted extrusion surfaces, and sweep. The method detects such profiles.

The at least one 3D surface comprise one or more 3D surfaces of the 3D model. These surfaces may consist in a subset of all the surfaces of the 3D model (said all surfaces resulting for example from a segmentation of the 3D model, the method optionally comprising performing this segmentation as an initial step). These surfaces may result from an initial step of pre-processing of the discrete 3D model to detect these surfaces as surfaces potentially defined by a profile. The method may comprise such an initial step, which may be done by any known method. This initial step may comprise applying the method disclosed in European Patent Application EP21305673.2 filed by Dassault Systèmes, and which is incorporated herein by reference, to detect extrusion surfaces in the 3D model. This initial step may as well comprise applying the method disclosed in European Patent Application EP21305763.1 filed by Dassault Systèmes, and which is incorporated herein by reference, to detect revolution surfaces in the 3D model. This initial step may as well comprise applying the method disclosed in European Patent Application EP23306189.4 filed by Dassault Systèmes, and which is incorporated herein by reference, to detect draft surfaces in the 3D model (more specifically, applying the test performed by this method to detect draft surfaces in the 3D model). The initial step may as well comprise applying any suitable known method to detect sweep surfaces in the 3D model. Alternatively, the subset may be selected by a user, for example graphically by clicking on the surfaces to select.

The 3D discrete model is a 3D discrete geometrical representation of the mechanical part. The discrete geometrical representation is a data structure which comprises a discrete set of pieces of data. Each piece of data may be equivalently referred to as a discrete element. Each piece of data represents a respective geometrical entity positioned in a 3D space. Each geometrical entity represents a respective location of the 3D object (in other words, a respective portion of material constitutive of a solid represented by the 3D object). The aggregation (*i.e.*, union or juxtaposition) of the geometrical entities represents altogether the 3D object. The discrete geometrical representation may in examples comprise a number of such pieces of data higher than 100, 1000, or 10000.

The discrete geometrical representation may for example be a 3D point cloud, each geometrical entity being a point. The discrete geometrical representation may alternatively be a 3D mesh, each geometrical entity being a mesh tile or face. The 3D mesh may be regular or irregular (*i.e.*, consisting or not of faces of a same type). The 3D mesh may be a polygonal mesh, for example a triangular mesh. The 3D mesh may be obtained from a 3D point cloud, for example by triangulating the 3D point cloud (*e.g.*, with a Delaunay triangulation).

The 3D point cloud or 3D mesh may be determined from physical measurements on a real object (*i.e.* a real mechanical part), for example within a reconstruction process. The 3D reconstruction process may comprise providing the real object, providing one or more physical sensors each configured for acquiring a respective physical signal, and acquiring one or more respective physical signals by operating the one or more physical sensors on the real object (*i.e.*, scanning the real object with each sensor). The 3D reconstruction may then automatically determine a 3D point cloud and/or a 3D mesh based on the measurements, according to any known technique. The one or more sensors may comprise a plurality of (*e.g.*, RGB, and/or image or video) cameras and the determination may comprise a structure-from-motion analysis. The one or more sensors may alternatively or additionally comprise one or more depth sensors (*e.g.*, on an RGB-depth camera) and the determination may comprise a 3D reconstruction from depth data. The one or more depth sensors may for example comprise a laser (*e.g.*, a lidar) or an ultrasound emitter-receiver. The 3D reconstruction process may be a part of a reverse engineering process to obtain a CAD model for the real object, the reverse engineering process also including the method which detects CAD volume extrusion operators on the measured 3D object. The CAD volume extrusion operators detected by the method contributes to the reverse engineering process as contributes to define the raw measured object by CAD features.

The 3D point cloud or 3D mesh may alternatively be obtained from a 3D modeled object representing a skin (*i.e.*, outer surface) of a solid or mechanical part for example by ray casting on the 3D modeled object or tessellating the 3D modeled object. The tessellating may be performed according to any 3D modeled object rendering process. Such a rendering process may be coded on any CAD system in order to display a graphical representation of the 3D modeled object. The 3D modeled object may be designed or have been designed by a user with a CAD system.

The method may comprise providing the discrete 3D model, *e.g.* at an initial step of the method. This may include retrieving (*e.g.* downloading) the 3D model from a (*e.g.* distant) memory or server or database where the 3D model object has been stored (*e.g.* further to a 3D scan of the mechanical part). When the discrete 3D model stems from a 3D scan of the mechanical part, providing the discrete 3D model may comprise performing the 3D scan of the mechanical part, thereby obtaining a 3D point cloud as the 3D discrete model, or meshing this 3D point cloud (*e.g.* with any suitable triangulation process) and thereby obtaining a 3D mesh as the discrete 3D model.

For each 3D surface of the said at least one 3D surface, the method comprises providing a candidate parameterization of the 3D surface and a candidate projection of the 3D surface into $\mathbb{R}^2$.

If *M* is a (topological) manifold of dimension d, a parameterization is the construction of an atlas of charts on *M*, i.e. a set of homeomorphisms $\mathcal{A} = \left(\varphi_i : U_i \subset M \longrightarrow \varphi_i(U_i) \subset \mathbb{R}^d\right)_{i \in I}$ such that $(U_i)_{i \in I}$ forms an open cover of *M*. Of course, on a smooth manifold (i.e. $C^\infty$), one can build an atlas of smooth charts ($C^\infty$-diffeomorphisms). Surface meshes or point clouds represent polygonal surfaces, which are a special case of topological manifolds of dimension 2. So, one may find a parameterization of a mesh or point cloud, i.e. a family of continuous maps with values in $\mathbb{R}^2$, covering the whole surface with their domains. The candidate parameterization of the 3D surface is any such parameterization of the 3D surface. The candidate parameterization may be any parameterization that follows the natural directions of the surface. For example, the candidate parameterization of the 3D surface may be the parameterization obtained by the method for parameterization disclosed in European Patent Application EP21305671.6 filed by Dassault Systèmes, and which is incorporated herein by reference.

The candidate projection of the 3D surface into $\mathbb{R}^2$ may be any initial guess of a best projection $\pi$ to satisfy equality (*) (in the discrete setting). Such an initial guess may be provided by a user or by any computer-implemented method suitable for this purpose. For example, if the surface is an extrusion surface, the candidate projection may be the orthogonal projection computed by the extrusion detection method disclosed in European Patent Application EP21305673.2, which is incorporated herein by reference. If the surface is a revolution surface, the candidate projection may be the orthogonal projection computed by the revolution detection method disclosed in European Patent Application EP21305763.1, which is incorporated herein by reference. If the surface is a draft surface, the candidate projection may be the projection computed by the draft detection method disclosed in European Patent Application 23306189.4, which is incorporated herein by reference. Other solutions exist in the prior art to compute the candidate projection in various cases of surfaces.

The steps of the method are performed for each 3D surface of said at least one 3D surface, where the candidate parameterization and projection are inputs. The steps may be repeated for several different candidate parameterizations and/or several different candidate projections, until one couple parameterization-projection yields a valid profile or until the method determines that the possible couples parameterization-projection all yield non-valid profiles.

Further to the providing of the candidate parameterization and projection of the 3D surface, the method comprises computing a function. The function penalizes, for each couple of points of the 3D surface having neighboring parameter values, a distortion between a disparity between the projection of the points and a disparity between the parameterization of the points. This means that the function depends on each couple of points of the 3D surface having neighboring parameter values (*i.e.* having close parameter values), the parameter value of a point being the value of the parameterization of this point according to the candidate parameterization. The function may for example be a sum or a maximum, on these couple of points, of said distortion for each couple of points.

The function may penalize the distortion for each couple of consecutive points of the 3D surface according to an order of their parameter values. In other words, the distortion may depend on each couple of consecutive points, for example may be a sum or a maximum over these couples of consecutive points. Each couple is a couple of consecutive points of the 3D surface according to an order (*i.e.* increasing or decreasing) of their parameter values, *i.e.* the points of the 3D surface are ordered according to an increasing or decreasing order of the values of their parameters (as given by the candidate parameterization), and consecutive points are points which are consecutive in this order.

The distortion is a term (*e.g.* a subtraction) that tends to have high value (at least in absolute value) when the disparity between the projection of the points (*i.e.* their images by the candidate projection) and the disparity between the parameterization of the points are too discrepant, *i.e.* for example when the disparity between the projection of the points has high value (*i.e.* the projected points tend to be far from each other when projected while expected to be close on the profile) and the disparity between their parameterization values has low value (*i.e.* the points are expected to be close on the profile). The distortion thus ensures that points which are expected to be close on the profile (according to their parameterization) are to remain close on $\mathbb{R}^2$ when projected by the candidate projection. In other words, disparity in terms of parameterization corresponds to the distance that is expected between points on the profile curve and this distance is compared to the distance achieved by the projection.

The disparity between the projection of the points may be, for each couple of points, an increasing function of a distance between the projections of the two points (*i.e.* between their images by the candidate projection). The disparity between the parameterization of the points may be, for each couple of points, an increasing function of a distance between the parameterizations of the two points (*i.e.* between their images by the candidate projection).

An example of a formula for the function will now be discussed. This formula stems from the discrete setting of the present disclosure. For completeness, the continuous setting is first discussed.

**Continuous Setting**

Let *X* be a topological space. Let $\pi: \mathcal{X} \to \mathbb{R}^2$ and $\varphi: \mathcal{X} \to \mathbb{R}$ be continuous maps. $(\pi, \varphi)$ is said to be a profile reduction of *X* if $\exists \gamma: \varphi(\mathcal{X}) \to \mathbb{R}^2$ such that $\pi = \gamma \circ \varphi$ and:

$$|\dot{\gamma}|(t) = 1 \quad \forall t \in \varphi(\mathcal{X})$$

(i.e. $\gamma$ is parameterized by arc length).

For every pair of points p, $q \in X$, the distortion is defined by:

$$D_{\pi,\varphi}(p,q)^2 = |\pi(p) - \pi(q)|^2 - |\varphi(p) - \varphi(q)|^2$$

and for $\delta > 0$, the local distortion energy is defined by:

$$E_\delta^{\pi,\varphi}(p) = \sup\left\{ D_{\pi,\varphi}(q,q') \ \mid \ \varphi(q), \varphi(q') \in B\left(\varphi(p), \frac{\delta}{2}\right) \right\}$$

$(\pi, \varphi)$ is a profile reduction of *X* if and only if:

$$\lim_{\delta \to 0} \frac{1}{\delta^2} E_\delta^{\pi,\varphi}(p) = 0 \qquad \forall p \in \mathcal{X}$$

i.e.

$$\sup_{p \in \mathcal{X}} \lim_{\delta \to 0} \frac{1}{\delta^2} E_\delta^{\pi,\varphi}(p) = 0$$

**Discrete Setting**

Let $V = (v_1, \cdots, v_n) \in (\mathbb{R}^2)^n$ be a 2D point cloud that corresponds to the projection (by the candidate projection) of the surface into $\mathbb{R}^2$ and let $F = (f_1, \cdots, f_n) \in (\mathbb{R})^n$ be associated parameters (*i.e.* according to the candidate parameterization) It is assumed that $f_i \leq f_{i+1}$ for all $1 \leq i \leq n - 1$ (otherwise, a permutation of the indices can be done that makes this hypothesis true). This is the order of the parameter values. *V* comes from an approximation of an embedded topological space in the following sense $v_i = \pi(p_i)$, with $p_i \in X$ and $\pi: \mathcal{X} \to \mathbb{R}^2$. This is the case since V is the projection of the 3D surface by the candidate projection $\pi$. It is also assumed that $\varphi(p_i) = f_i$ for some continuous $\varphi: \mathcal{X} \to \mathbb{R}$. Note that such a parameterization can be obtained using the method for parametrization disclosed in previously discussed European Patent Application EP21305671.6.

The approximate local distortion energy is thus defined as:

$$E_i^{V,F} = D_{\pi,\varphi}(p_i, p_{i+1})^2 = |v_{i+1} - v_i|^2 - |f_{i+1} - f_i|^2$$

and the distortion as:

$$E^{V,F} = \sup_i E_i^{V,F}$$

For $\varepsilon > 0$, (V, F) is a $\varepsilon$-almost discrete profile if:

$$E^{V,F} \leq \epsilon^2$$

(V, F) is a valid discrete profile if it is a $\varepsilon$-almost discrete profile for $\varepsilon$ small enough (e.g. comprises between 0.001*the diameter of the 3D model and 0.05*the diameter of the 3D model, with for example $\varepsilon$ being chosen higher as the model features noise).

In other words, the function may be of the type:

$$E^{V,F} = \sup_i E_i^{V,F},$$

where:

$$E_i^{V,F} = D(p_i, p_{i+1})^2 = |v_{i+1} - v_i|^2 - |f_{i+1} - f_i|^2,$$

where:

- $V = (v_1, \cdots, v_n)$ are the projections of the points $(p_1, \cdots, p_n)$; and
- $F = (f_1, \cdots, f_n)$ are the parameters associated with the points $(p_1, \cdots, p_n)$, the $f_i$ and the $p_i$ being ordered.

Further to the computing of the function, the method then comprises determining that the candidate parameterization and the candidate projection form a valid profile of the 3D surface if the computed function is smaller than a predefined threshold. In other words, the method compares the computed value of the function to a predefined threshold, e.g. checks whether $E^{V,F} \leq \varepsilon^2$ with $\varepsilon^2$ being the predefined threshold, and determines that: the candidate parameterization and projection form a valid profile of the 3D surface if the function's value is lower than the predefined threshold, or the candidate parameterization and projection do not form a valid profile of the 3D surface if the function's value is larger than the predefined threshold. The method may output data indicating whether or not the candidate parameterization and projection have been determined to form a valid profile. In the case the candidate parameterization and projection have been determined to form a valid profile, the method may further comprise computing the profile curve $\gamma$ that satisfies equation (*), by any known suitable profile computation method.

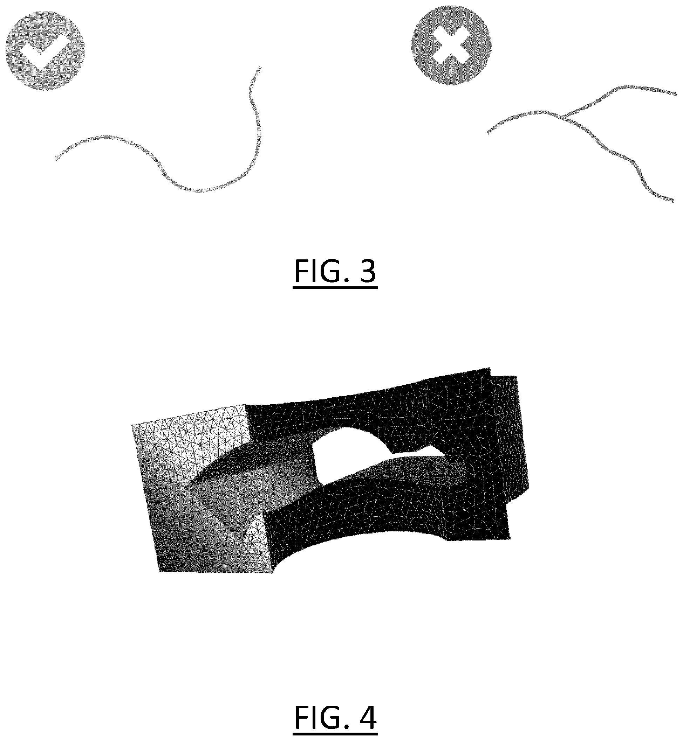

The method steps are performed for each 3D surface of the at least one 3D surface. In other words. For each couple (V,F) that represents a discrete profile candidate for a given surface of the at least one 3D surface, the method may compute $E^{V,F}$ and filter the couple out if it is not a valid discrete profile. FIG. 2 shows examples of couples (V, F) classified as valid discrete profile or non-valid discrete profile. The example on the right-hand side of the figure will lead to the computation of a high value of $E^{V,F}$ (larger than $\varepsilon^2$). Indeed, some points have very close values of the parameter $f$ while having very different positions (the $v$ are far apart). Thus, (V, F) will be classified as a non-valid discrete profile. By contrast to the left-hand side figure, in the right-hand side the points separate into two branches as one progresses to the right of the figure. This is coherent with the fact that a continuous curve separating into several branches (non-manifold curve) is not a valid profile, as illustrated by FIG. 3.

The at least one 3D surface may comprise at least one 3D surface for which the candidate parameterization and the candidate projection are determined not to form a valid profile. The at least one 3D surface may additionally or alternatively comprise at least one 3D surface for which the candidate parameterization and the candidate projection are determined to form a valid profile.

The method may further comprise, if it is determined that the candidate parameterization and the candidate projection form a valid profile of the 3D surface, fitting a CAD operator to the surface based on the profile. This can be done by any suitable method.

The at least one 3D surface may comprise a 3D surface formed by an aggregation of a first 3D surface and a second 3D surface. In this case, the candidate projection is a candidate projection of the aggregation of the first and second 3D surfaces, and the candidate parameterization is a candidate parameterization of the aggregation of the first and second 3D surfaces. The first 3D surface and the second 3D surface may for example be adjacent and have common points. In this case, the candidate parameterization of the aggregation of the first and second 3D surfaces is an aggregation of a parametrization of the first 3D surface and of the second 3D surface such that the common points have a same parameterization. The candidate projection may be any suitable candidate projection.

For example, let $C = (c_1, \cdots, c_r) \in X^r$ be the common points, $P = (p_1, \cdots, p_m) \in X^m$ the remaining points of the first surface, and $Q = (q_1, \cdots, q_n) \in X^n$ the remaining points of the second surface. Consider $\tilde{P} = (c_1, \cdots, c_r, p_1, \cdots, p_m)$ and $\tilde{Q} = (c_1, \cdots, c_r, q_1, \cdots, q_n)$, with the associated parameters $F = (f_1, \cdots, f_{r+m}) \in \mathbb{R}^{r+m}$ (parameterization of the first surface) and $G = (g_1, \cdots, g_{r+n}) \in \mathbb{R}^{r+n}$ (parameterization of the second surface). It can be assumed that assume $F = \varphi(\tilde{P})$ and $G = \Psi(\tilde{Q})$ with $\varphi, \psi : \mathcal{X} \to \mathbb{R}$ continuous maps. Let $\pi : \mathcal{X} \to \mathbb{R}^2$ be the candidate projection ($\pi$ is continuous). Let $\bar{s}$ be the following mean shift value:

$$\bar{s} = \frac{1}{r} \sum_{i=1}^{r} (g_i - f_i)$$

The parametrization of the aggregation may be obtained by computing $\hat{f}_i = f_i + \frac{1}{2}\bar{s}$ and $\hat{g}_i = g_i - \frac{1}{2}\bar{s}$ and finally:

$$h_i = \begin{cases} \frac{1}{2}(\hat{f}_i + \hat{g}_i) & \text{for } 1 \leq i \leq r \\ \hat{f}_i & \text{for } r+1 \leq i \leq r+m \\ \hat{g}_{i-m} & \text{for } r+m+1 \leq i \leq r+m+n \end{cases}$$

These parameters to the point cloud can be associated with the points cloud:

$$R = (c_1, \cdots, c_r, p_1, \cdots, p_m, q_1, \cdots, q_n) \in (\mathcal{X})^{r+m+n},$$

and $V = \pi(R)$.

The process to turn $((\tilde{P}, F), (\tilde{Q}, G))$ into $(R, H)$ may be referred to as a parameterization aggregation, and this aggregation is valid if $(V, H)$ is a valid discrete profile (according to the determining step of the method). Again, this computation may be used to produce new profile candidates and filter out the aggregations that are not valid.

In other words, the parameterization of the aggregation of the first and second 3D surfaces may be of the type (e.g. is exactly):

$$h_i = \begin{cases} \frac{1}{2}(\hat{f}_i + \hat{g}_i) & \text{for } 1 \leq i \leq r \\ \hat{f}_i & \text{for } r+1 \leq i \leq r+m \\ \hat{g}_{i-m} & \text{for } r+m+1 \leq i \leq r+m+n \end{cases}$$

where:

$$\bar{s} = \frac{1}{r}\sum_{i=1}^{r}(g_i - f_i)$$

$$\hat{f}_i = f_i + \frac{1}{2}\bar{s}$$

$$\hat{g}_i = g_i - \frac{1}{2}\bar{s}$$

with $F = (f_1, \cdots, f_{r+m})$ the parameterization of the first 3D surface and $G = (g_1, \cdots, g_{r+n})$ the parameterization of the second 3D surface, $(f_1, \cdots, f_r)$ and $(g_1, \cdots, g_r)$ parameterizing the common points $(c_1, \cdots, c_r)$. Here the $f_i$ and $g_i$ are not necessarily ordered (in increasing or decreasing order) as are the $f$ in the above-discussed formula for $E_i^{V,F}$, although in example they may. They are merely ordered to make the common points appear.

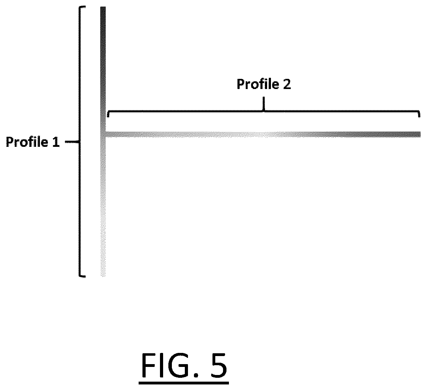

FIG. 4 shows an example where the method will detect that the two planar segments (segment 1 and segment 2) on the surface mesh (representing a 3D mechanical part), cannot be reconstructed from a single extrusion with a valid profile, while if taken separately, they can be part of two extrusions. In other words, while the valid discrete profiles for both of those segments can be computed, the corresponding profiles cannot be aggregated into a larger valid discrete profile. The profiles are illustrated on FIG. 5.

As previously said, the method may be included in a process for designing and/or manufacturing the mechanical part represented by the discrete 3D model.

"Designing a manufacturing product/mechanical part/mechanical product" designates any action or series of actions which is at least a part of a process of elaborating a modeled object (3D or 2D) of the manufacturing product/mechanical part/mechanical product. The method may form such a process or may form at least a part of the process. Indeed, as previously explained, the method may be part of a step of conversion of the discrete 3D model into a 3D CAD model, the method detecting profiles to allow the fitting of CAD operators based on these profiles (and the method may comprise this fitting step).

The method thus generally manipulates modeled objects, such as the discrete 3D model. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (e.g. a CAD system or a CAD software), it is additionally meant any system, software or hardware, adapted at least for designing a modeled object on the basis of a graphical representation of the modeled object and/or on a structured representation thereof (e.g. a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 3D modeled object involved in the method may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object outputted by the design step of conversion of the discrete 3D model into a CAD model (which step may comprise the method) is a CAD model, for example comprising or consisting in a feature tree and/or a B-rep.

The CAD model may be feature-based (*e.g.* it may comprise a feature tree, and optionally a corresponding B-rep obtained by executing the feature tree). A feature-based 3D model allows (*e.g.* during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (*e.g.* footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, or after performing the step of conversion into a CAD model that may comprise the method, producing a physical product corresponding to the modeled object designed/processed/outputted by this step. The production process may comprise the following steps:

- (*e.g.* automatically) applying the step of conversion of the discrete 3D model into a CAD model, thereby obtaining the CAD model
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise one or more of the following steps:

- editing the obtained CAD model;
- performing simulation(s) based on the CAD model or on a corresponding CAE model (*e.g.* the CAE model from which the CAD model stems, after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file (*e.g.* comprising manufacturing instructions for manufacturing the product represented by the CAD model and/or control instructions for the manufacturing process and/or for commanding the manufacturing process or manufacturing tool(s) thereof) based on the (*e.g.* edited) CAD model (*e.g.* the control instructions stem from the CAD file storing the CAD model and/or specifications of the CAD model), for production/manufacturing of the manufacturing product;
- sending the CAD file and/or the manufacturing file/CAM file to a factory in view of manufacturing the product represented by the CAD model; and/or
- (*e.g.* automatically) producing/manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (*i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing set up model obtained from the CAD model. The manufacturing set up may comprise all data required for manufacturing the mechanical product (*e.g.* control instructions for controlling the manufacturing process) so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receives the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e.g.* automatically) checking if the CAD model has any geometric particularity (*e.g.* error or artefact) that may affect the production process and (*e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g.* rounding or filleting of geometries) may be carried out automatically as previously discussed, but also, by a user (*e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise (*e.g.* automatically) determining the machining or milling path, *i.e.* the path to be taken by the machining tool to machine the product. The path may comprise a set of coordinates and/or a parameterized trajectory to be followed by the machining tool for machining, and determining the path may comprise (*e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise (*e.g.* automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise (*e.g.* automatically) performing a sequence of molding checks based on the CAD model to check that the geometry and/or distribution of material captured by the CAD model is adapted for molding, and (*e.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e.g.* automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 6 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for profile detection in a discrete 3D model representing a mechanical part, the discrete 3D model being obtained from a 3D scan of the mechanical part, the method comprising, for each 3D surface of at least one 3D surface of the 3D model:

   - providing:

     ◦ a candidate parameterization of the 3D surface; and
     ◦ a candidate projection of the 3D surface into $\mathbb{R}^2$;

   - computing a function that penalizes, for each couple of points of the 3D surface having neighboring parameter values, a distortion between a disparity between the projection of the points and a disparity between the parameterization of the points; and
   - determining that the candidate parameterization and the candidate projection form a valid profile of the 3D surface if the computed function is smaller than a predefined threshold.

2. The method of claim 1, wherein the function penalizes the distortion for each couple of consecutive points of the 3D surface according to an order of their parameter values.

3. The method of claim 2, wherein:

   - the disparity between the projections of the points is an increasing function of distance between the projection of the points; and
   - the disparity between the parametrization of the points is an increasing function of a distance between the parametrization of the points.

4. The method of claim 3, wherein the function is of the type:

$$E^{V,F} = \sup_i E_i^{V,F},$$

where:

$$E_i^{V,F} = D(p_i, p_{i+1})^2 = |v_{i+1} - v_i|^2 - |f_{i+1} - f_i|^2,$$

where:

   • $V = (v_1, \cdots, v_n)$ are the projections of the points $(p_1, \cdots, p_n)$; and
   • $F = (f_1, \cdots, f_n)$ are the parameters associated with the points $(p_1, \cdots, p_n)$, the $f_i$ and the $p_i$ being ordered.

5. The method of any one of claims 1 to 4, wherein the at least one 3D surface comprises at least one 3D surface for which the candidate parameterization and the candidate projection are determined not to form a valid profile.

6. The method of any one of claims 1 to 5, wherein the at least one 3D surface comprises a 3D surface formed by an aggregation of a first 3D surface and a second 3D surface, the candidate projection being a candidate projection of the aggregation of the first and second 3D surfaces, the candidate parameterization being a candidate parameterization of the aggregation of the first and second 3D surfaces.

7. The method of claim 6, wherein the first 3D surface and the second 3D surface are adjacent and have common points, the candidate parameterization of the aggregation of the first and second 3D surfaces being an aggregation of a parametrization of the first 3D surface and of the second 3D surface such that the common points have a same parameterization.

8. The method of claim 7, wherein the parameterization of the aggregation of the first and second 3D surfaces is of the type:

$$h_i = \begin{cases} \frac{1}{2}(\hat{f}_i + \hat{g}_i) & \text{for } 1 \leq i \leq r \\ \hat{f}_i & \text{for } r+1 \leq i \leq r+m \\ \hat{g}_{i-m} & \text{for } r+m+1 \leq i \leq r+m+n \end{cases}$$

where:

$$\bar{s} = \frac{1}{r}\sum_{i=1}^{r}(g_i - f_i)$$

$$\hat{f}_i = f_i + \frac{1}{2}\bar{s}$$

$$\hat{g}_i = g_i - \frac{1}{2}\bar{s}$$

with $F = (f_1, \cdots, f_{r+m})$ the parameterization of the first 3D surface and $G = (g_1, \cdots, g_{r+n})$ the parameterization of the second 3D surface, $(f_1, \cdots, f_r)$ and $(g_1, \cdots, g_r)$ parameterizing the common points $(c_1, \cdots, c_r)$.

9. The method of any one of claims 1 to 8, wherein the method further comprises, if it is determined that the candidate parameterization and the candidate projection form a valid profile of the 3D surface:

   - fitting a CAD operator to the surface based on the profile.

10. A computer program comprising instruction which, when executed by a computer, cause the computer to perform the method of any one of claims 1 to 9.

11. A computer-readable data storage medium having recorded thereon the computer program of claim 10.

12. A computer comprising a processor coupled to a memory, the memory having recorded thereon the computer program of claim 10.

EP 4 645 147 A1

## FIG. 1

## FIG. 2

19

FIG. 3

FIG. 4

# FIG. 5

## FIG. 6

Europäisches
Patentamt

European
Patent Office

Office européen
des brevets

## EUROPEAN SEARCH REPORT

**Application Number**

EP 24 21 9912

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 4 092 558 A1 (DASSAULT SYSTEMES [FR]) 23 November 2022 (2022-11-23) * paragraphs [0001], [0007], [0035], [0059], [0090], [0091], [0093], [0097], [0099]; figures 3,4 * | 1-12 | INV. G06F30/10 G06T17/00 G06V20/64 |
| A | CHANGCHANG WU ET AL: "Schematic surface reconstruction", COMPUTER VISION AND PATTERN RECOGNITION (CVPR), 2012 IEEE CONFERENCE ON, IEEE, 16 June 2012 (2012-06-16), pages 1498-1505, XP032232238, DOI: 10.1109/CVPR.2012.6247839 ISBN: 978-1-4673-1226-4 * abstract * * Sec. 3.3; figures 1,4 * | 1-12 | |

-----

-----

**TECHNICAL FIELDS SEARCHED (IPC)**

G06F
G06T
G06V

The present search report has been drawn up for all claims

| Place of search | Date of completion of the search | Examiner |
|---|---|---|
| Munich | 17 February 2025 | Lampmann, Arne |

EPO FORM 1503 03.82 (P04C01)

## ANNEX TO THE EUROPEAN SEARCH REPORT
## ON EUROPEAN PATENT APPLICATION NO.

EP 24 21 9912

This annex lists the patent family members relating to the patent documents cited in  the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | | Publication date |
|---|---|---|---|---|---|
| EP 4092558 | A1 | 23-11-2022 | CN | 115374546 A | 22-11-2022 |
| | | | EP | 4092558 A1 | 23-11-2022 |
| | | | JP | 2022179417 A | 02-12-2022 |
| | | | US | 2022382930 A1 | 01-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21305673
- EP 21305763
- EP 23306189
- EP 21305671
- EP 3327593 A
- EP 21306754